# EUROPEAN PATENT APPLICATION

(11) **EP 1 136 742 A1**
(43) Date of publication of application: **26.09.2001**
(21) Application number: 01201058.3
(22) Date of filing: 22.03.2001
(51) Int. Cl.: F16L 37/56, F16L 39/00, F16L 37/084

(54) **Gas Pipe connection**

(30) Priority: 22.03.2000 NL 1014716
(71) Applicant: UBBINK NEDERLAND B.V., NL-6984 AA Doesburg (NL)
(72) Inventor: van Dijk, Floris, 6984 AA Doesburg (NL)
(74) Representative: Ferguson, Alexander

(57) **Abstract**

Gas pipe connection of two gas pipes (1,2) comprising a coupling device (5,6) circumferentially extending at the outside for engaging the outer ends of both pipes (1,2), in which both pipe ends are provided with one or more holes (37,39) arranged divided in circumferential direction and the coupling device (5,6) is provided with protrusions (35,36) that can be snapped into said holes (37,39), which protrusions (35,36) are formed as a unity with it.

## Description

The invention relates to a connection for two gas pipes aligned with each other, in particular gas pipes accommodated in a supply line for combustion air to an oil or gas fired boiler and/or in a discharge line for flue gasses of said boiler. Gas also includes air here.

It is known to connect gas pipes to each other by using pipes of which the one end has been enlarged into a kind of bush through flaring, in which the unwidened end of the one pipe is fitted into the bush of the other pipe. For sealing a sealing ring is provided which is accommodated in a ring chamber formed in the bush. The connection is realised here through friction. In a line, especially when it is winding, many of these connections can be included. After a while, after many occasions of expansion and contraction of the line, it may happen that because of the length alterations over the entire line at the location of the least tight connection the connection comes loose. In order to prevent this, brackets are used to fixate the line at several places. This is laborious and time consuming. Furthermore the sight of such lines is an objection.

It is furthermore known to connect pipes to each other by placing the ends against each other and then embracing them by a clamping bracket. This connection also has the aforementioned disadvantages. A further disadvantage of this connection is that it is rather ugly.

It is an object of the invention to provide a gas pipe connection which at least at some points improves on this.

To that end the invention provides a gas pipe connection of two gas pipes comprising a coupling device circumferentially extending at the outside for engaging the outer ends of both pipes, in which both pipe ends are provided with a hole or several holes arranged divided in circumferential direction and the coupling device is provided with protrusions that can be secured or snapped into said hole or said holes. The pipes to be connected to each other can each simply be connected to the coupling device. Additional tools are not necessary here. The connection is both shielded as to sight and leakage by the coupling device.

Preferably the protrusions are formed as a unity with the coupling device.

Preferably the coupling device is provided with a number of protrusions that are arranged regularly divided in circumferential direction, preferably for each pipe end, so that the load transfer can take place symmetrically.

Preferably the coupling device comprises a female part and a male part, each being secured -preferably detachably- with snappable protrusions in respective pipe ends, in which the female part engages about the male part. Preferably the female part and the male part are secured on the outer surface and the inner surface, respectively, of the pipe ends. The mounting of the connection is further facilitated in this way. A further advantage of this is that the sealing can be realised on the interacting sealing surfaces of the female part and the male part.

Preferably the female part and the male part are provided with circle-cylindrical circumferential surfaces for fitting engagement of the respective pipe ends.

It is preferred here that the female part and male part are provided with conical circumferential surfaces that sealingly abut each other. The conical circumferential surfaces moreover are a pilot aid when making the coupling. When the female part and the male part are made of synthetic material the sealing can here be realised by a contact of synthetic material on synthetic material, without a sealing ring being necessary.

Preferably the conical circumferential surfaces are formed on circumferential ribs extending to the inside from the female part and to the outside from the male part, respectively, which preferably are situated between both end edges of both pipes. The sealing in the coupling device here as it were lies in line with the pipe walls, as a result of which the radial dimension of the connection can be kept limited as well as the flow resistance in the pipes.

Preferably the circumferential ribs have axially oriented circumferential surfaces for abutment to the end edges of the pipes in question, for providing support to them and providing an axial stop for them.

Preferably the female part, axially considered, engages over the protrusions of the male part, while fittingly engaging about the outer surface of the pipe that is connected to the male part. In an advantageous manner the female part can be provided here at its inside with accommodation spaces opening radially to the inside, into which the protrusions of the male part extend. Said protrusions of the male part then not only secure the male part to the pipe in question, but also to the female part.

For facilitating mounting and -possible- demounting it is provided that the accommodation spaces in circumferential direction are contiguous to a passage or exit for the protrusions, which passage/exit extends in circumferential direction and subsequently in axial direction facing away from the connection. Thus coupling can take place in every rotation position of the female and male parts, but uncoupling can only take place in one or some rotational positions.

Preferably the male part is tubular, as a result of which the resistance experienced by the gas flow at the location of the coupling device can remain minimal.

The coupling device preferably has the shape of flat cylinder, which preferably has a slightly bent convex outer surface in the pipe axis, for facilitating its handling and embellishing the connection.

The gas pipe connection according to the invention is suitable for a single line system, in which the supply and discharge lines are situated next to each other. The gas pipe connection according to the invention however can also be advantageously used in so-called concentric line systems. To that end the coupling device is provided with radial partitions for keeping at least one of the inner pipes centred. In such concentric systems as well the connection of the -assembled- pipes will be simple as a result.

In case a coupling device is used having a female part and a male part it is preferred that the male part is provided with the partitions. Here the male part can be provided in a simple structural manner with means for retaining the inner pipe axially in a direction away from the connection.

In a further development of this, said inner pipe has an end that is shaped like a female part and accommodates the end of the other inner pipe. It is preferred here that the female part of said inner pipe near its end is provided with a ring chamber opening to the inside for accommodating a sealing ring, which chamber has a semicircular cross-section. The flow resistance for the gasses in the line between both pipes -usually combustion air- and the flow resistance for the gases in the inner pipes -usually discharge gas- are kept limited as a result.

The invention will be elucidated on the basis of a number of exemplary embodiments shown in the attached drawings, in which:
figures 1A, B - 6A, B show consecutive steps in the realisations of a gas pipe connection having concentric inner and outer pipes with the help of a coupling device according to the invention;

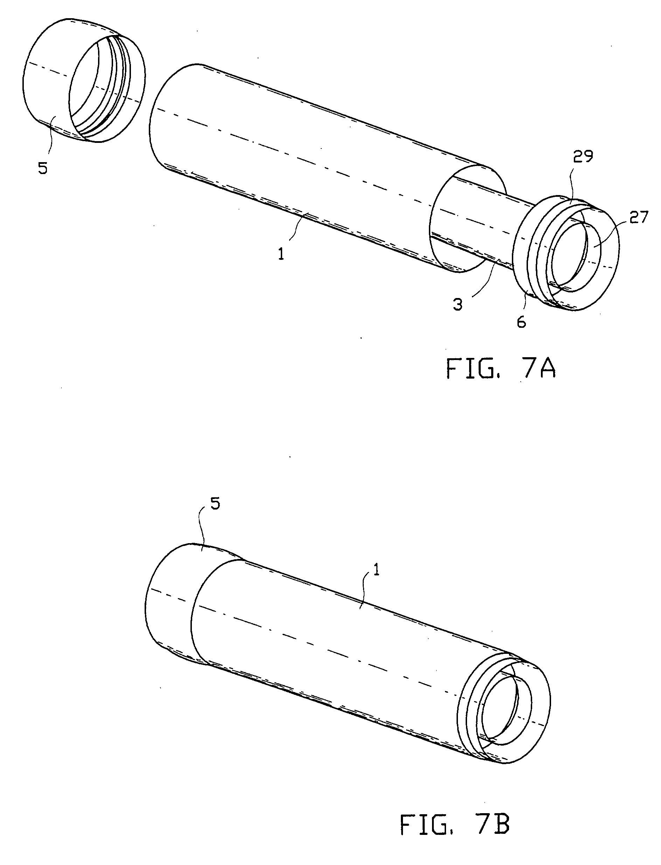

figures 7A, B show views in perspective and views in disassembled situation and assembled situation, respectively, of a concentric gas pipe assembly provided with a coupling device according to the invention; and
figures 8A, B show a pipe connection according to the invention with single gas pipes.

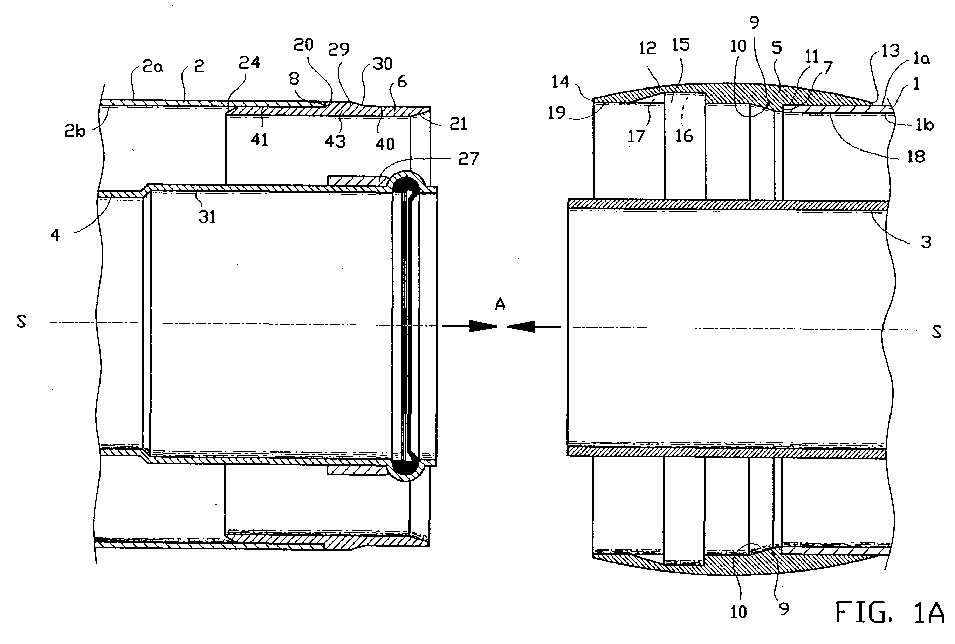

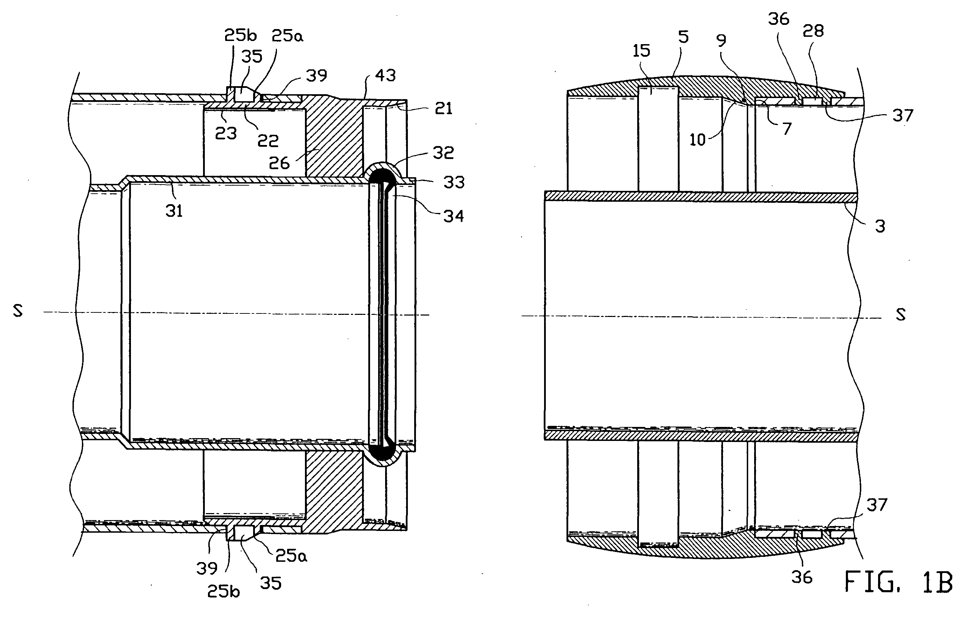

On the right hand side in figures 1A-1B, a cross-section of a concentric pair of pipes 1 and 3 is shown, and on the left hand side a concentric pair of pipes 2 and 4 to be coupled to it. The centre line of both pipe assemblies is shown by S-S. It is noted here that the cross-section in figure 1A and the cross-section in figure 1B have been made at cross-sectional surfaces that are at 90° with respect to each other.

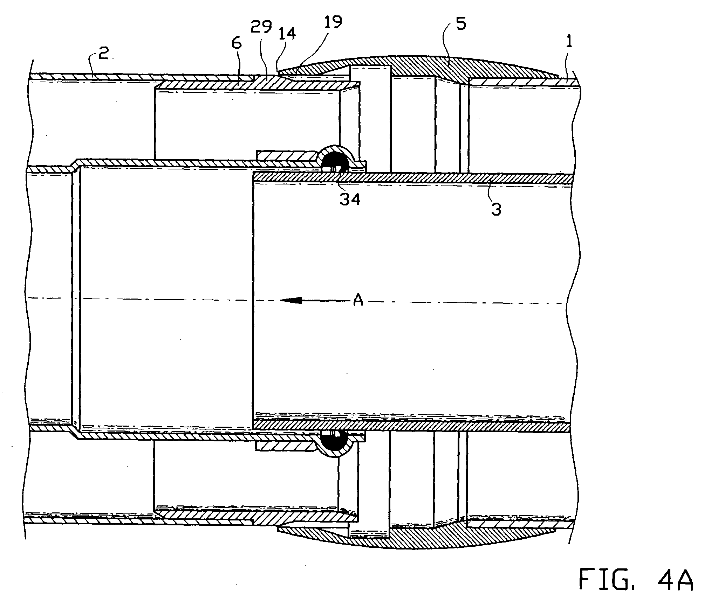

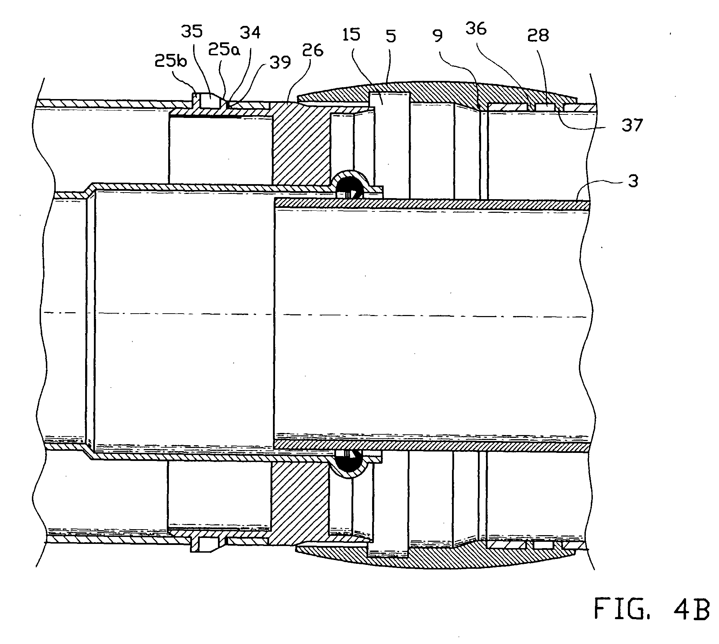

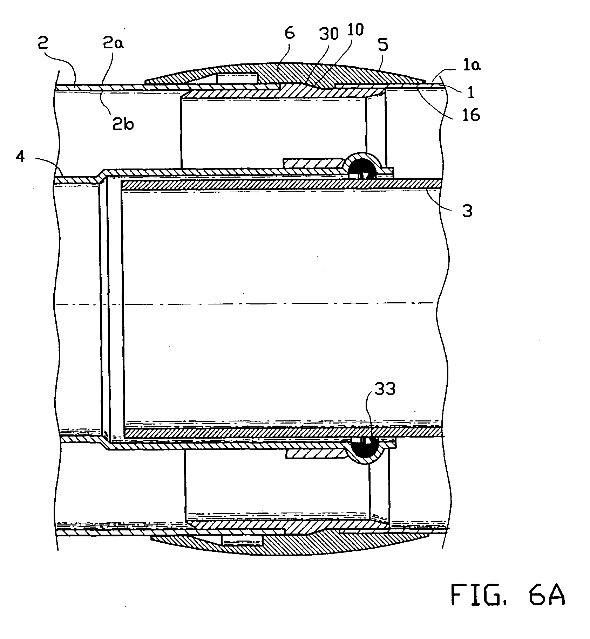

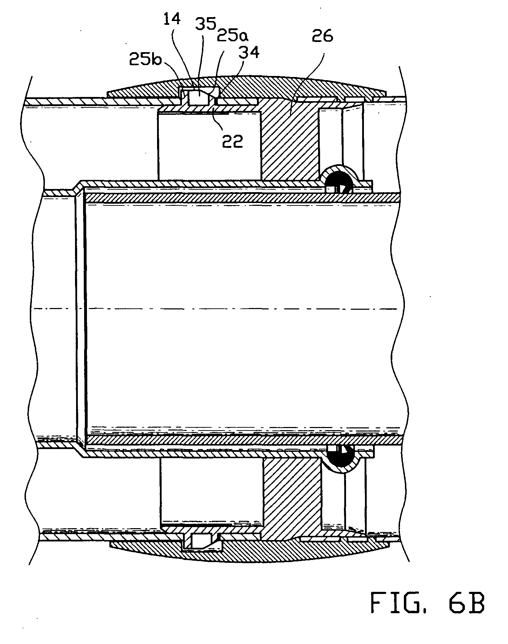

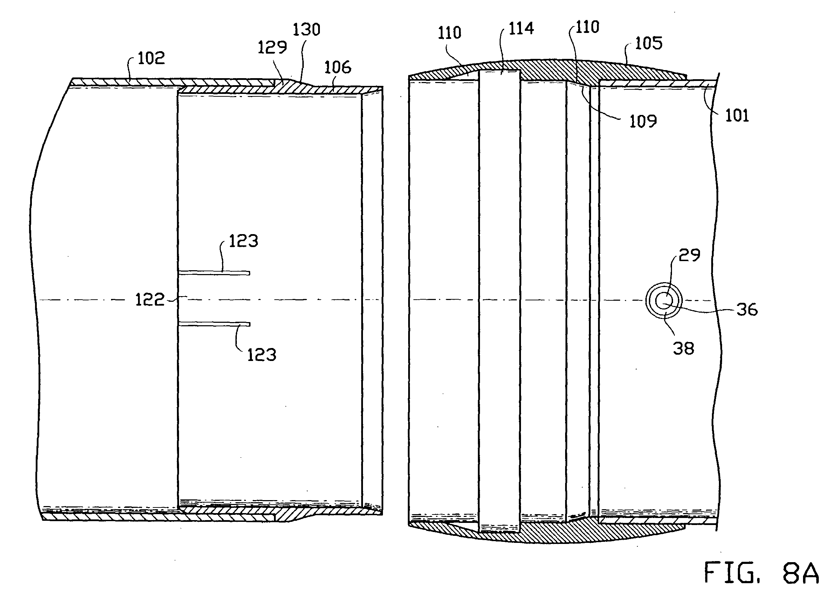

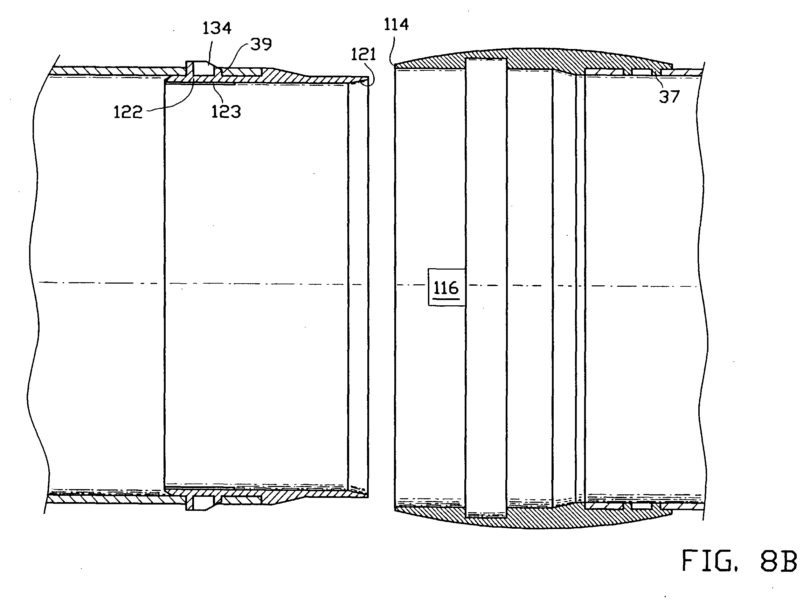

In the figures it is indicated that the outer pipes 1 and 2 are provided with-circle-cylindrical- outer surfaces 1a, 2a and inner surfaces 1b, 2b. Near their ends, as shown in figure 1B, in which figures 8A and 8B are also referred to, the pipes 1 and 2 are provided with holes 37 and 39, respectively. As a result of the presence of the inner pipes 3 and 4 in the figures 1-6 said holes cannot be seen in the views.

The inner pipe 3 has an untreated end and the inner pipe 4 has an enlarged end section 31, having a circumferential semicircular ring chamber 32 opening to the inside, in which a semi-spherical, circumferential sealing ring 34 having a lip has been accommodated, in which the ring chamber 32 towards the end merges into a short, straight end section 33.

On the pipe 1 a male part 5 or socket ring of a coupling device according to the invention has been mounted. The socket ring 5 is circumferential and has a smooth convex outer surface 12, which in axial direction merges into thin edges 13 and 14, respectively. The socket ring 5 is furthermore provided with a circle-cylindrical outer surface 18 and a circle-cylindrical inner surface 19, of which the diameter is at least almost similar to the-mutually equal- diameters of the surfaces 1b and 2b of the pipes 1 and 2.

Between the inner surfaces 18 and 19 a shoulder-shaped ring 9 is present having a right-angled triangular cross-section and facing the inside and which has an axially facing circumferential stop surface 7 and a inclined turned circumferential sealing surface 10.

In the inner surface 19 a circumferential ring chamber 15 is provided, which at two diametrically opposite locations, as seen in the drawing to the left, merges into insertion or withdrawal channels 16, respectively, that are provided with an inclined wall 17.

At the inner surface 18 at diametrically opposite locations the socket ring 5 is provided with protrusions 36, that are each formed by a circular edge 28 surrounding a recess 38. The diameter of each protrusion 36 at least almost corresponds to the diameter of the aforementioned hole 37.

In the situation shown in the figures 1A and 1B, just preceding the realisation of the pipe connection, the socket ring 5 is fixedly snapped to the pipe 1 with both protrusions 36 in the holes 37, in which the axially facing circumferential plane 11 tightly abuts the end edge of the pipe 1. Socket ring 5 and pipe 1 then as it were form one unity.

Left in the figures 1A and 1B a male part 6 of a coupling device according to the invention is shown, which male part can cooperate with the aforementioned female part or socket ring 5. The male part 6 is substantially double-annular, having an outer ring 43 and an inner ring 27 situated at radial distance from it, which are connected to each other by means of radial partitions 26 that have a wing profile. The diameter of the inner ring 27 corresponds to the diameter of the widened pipe end 31, but is smaller than the one of the ring chamber 32 in order to retain it in axial direction to the left -as seen in the drawing-.

At right-hand end edge 21, as seen in the drawing, the outer ring of the male part 6 is tapering. At the other end an also tapering end edge 24 is situated, its tip, however, being situated at the radial inner side of the ring, in order to thus form an inclined ascending or insertion surface for the male part 6 when inserting into the end of the pipe 2.

At the radial outer side, the male part 6 is provided with a circumferential rib 29, having an inclined sealing surface 30 facing the right, as seen in the drawing, and at the other side an axially oriented circumferential end surface 8. The outer diameter of said rib corresponds to the one of the outer surface 2a of the pipe 2. The diameter of the outer surface 40 and 41 corresponds at least almost to the diameter of the inner surface 2b of the pipe 2.

As can also be seen while referring to the figures 8A and 8B the male part 6 is provided with lips 22, that are bounded by the line-shaped breakthroughs 23 in the outer ring of the male part 6. On the lips 22, of which two are present that are situated diametrically opposite each other, the protrusions 35 are formed, comprising an annular raised edge 25a, b, surrounding a recess, in which the edge 25a has a straight portion 25b and a bevel 25a facing the right. The protrusion 35 can be snugly accommodated in the circular holes 39 in the pipe 2, in order to let the male part 6 form an as it were one manageable unit with the pipe 2, in which the male part 6 tightly abuts the edge 8.

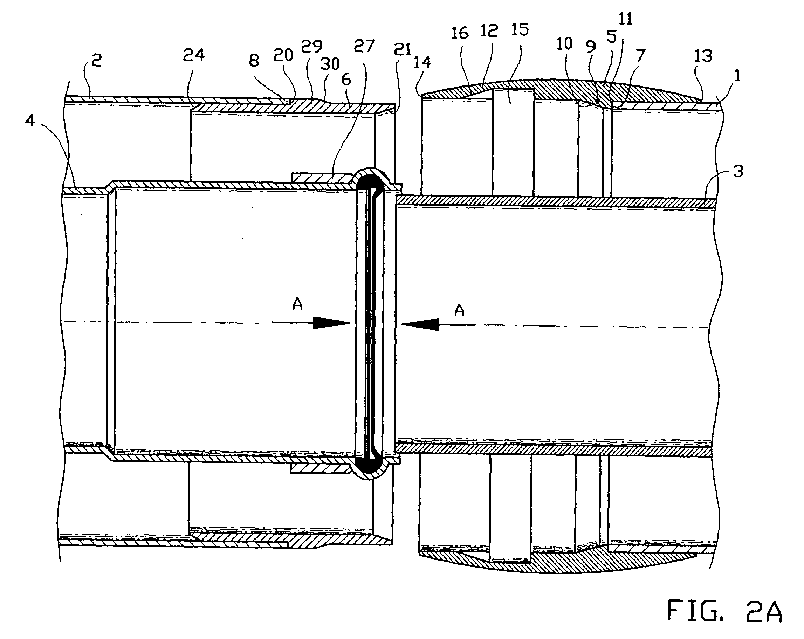

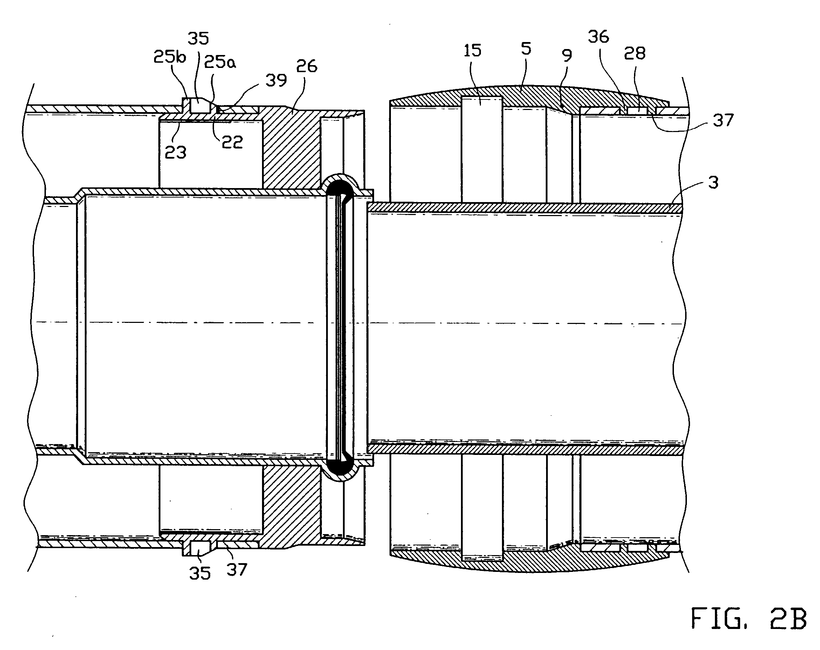

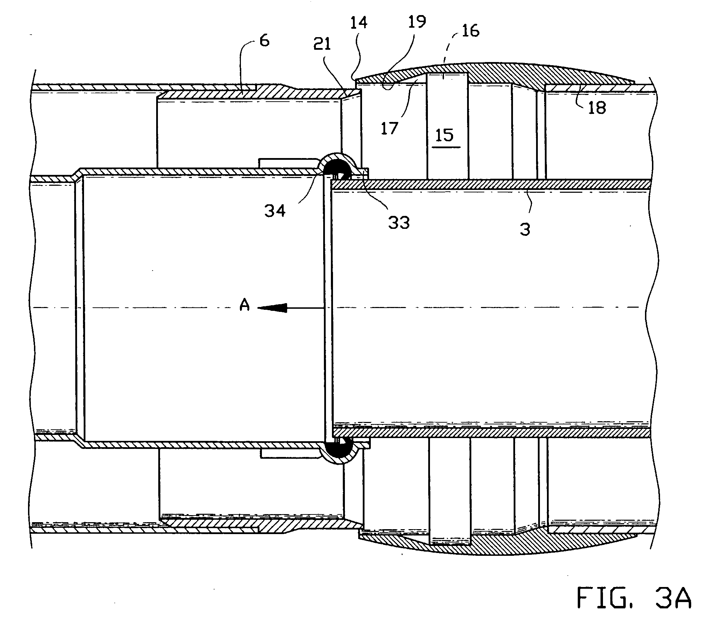

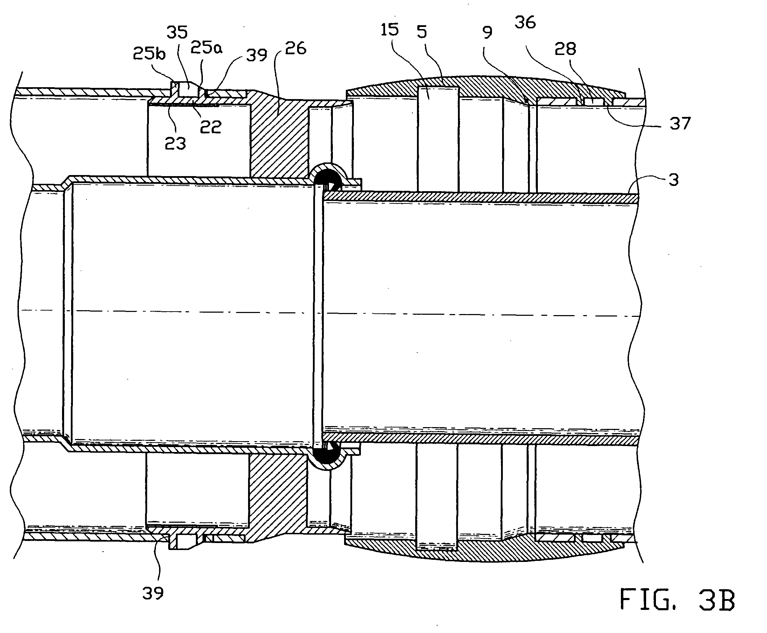

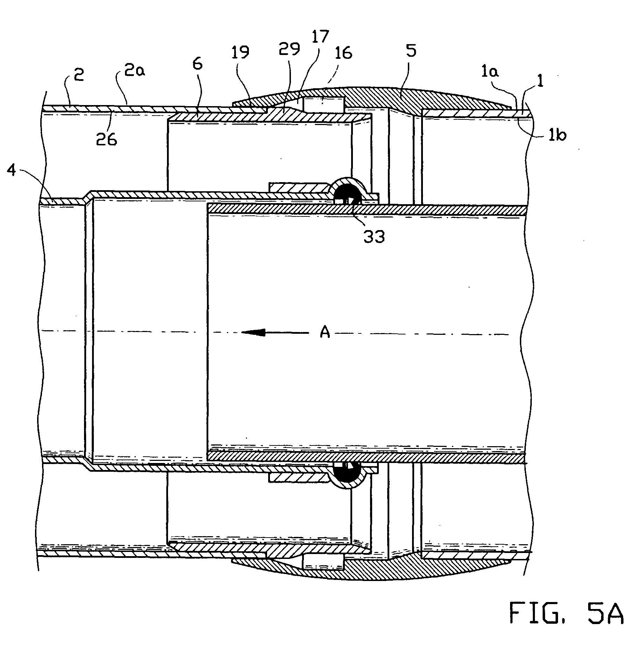

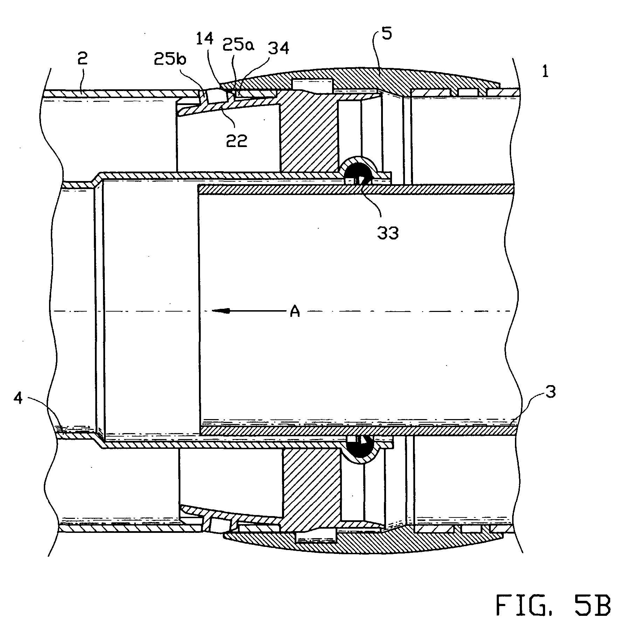

In the situation shown in figures 1A-1B both pipe assemblies 1, 3 and 2, 4 are moved towards each other in the directions A. Via the situation shown in the figures 2A, B the situation shown in the figures 3A, B is reached, in which the inner pipe 3 becomes engaged about by the sealing ring 34. The sealing ring 34 here engages about the outer surface of the pipe 3 in a sealing manner. The edge 14 of the socket ring 5 here has arrived at the location of the pointed end edge 21 of the male part 6. Subsequently the end edge 14 reaches the location of the annular inclined surface 30, which here cooperates in centring the socket ring 5, in addition to centring the pipe 3 by the sealing ring 34 and the widened inner pipe end 31. As can be seen in figures 5A and 5B, the inner surface 19 of the socket ring 5 then runs snugly fitting over the outer surface 2a of the pipe 2. The pointed end edge 14 then abuts the inclined portion 25a of the protrusion 35, which because of that and as a result of the lips 22 being springy, is urged down and radially to the inside. The socket ring 5 can then be slid further to the left, until the protrusion 35 ends up at the level of the annular chamber 15 and snaps into it. The dimensions of the female part 5 and the male part 6 are such that at that moment also the inclined surfaces 10 and 30 abut each other tightly and sealingly.

The annular channel that is limited radially to the outside by the pipes 1 and 2 and radially to the inside by the pipes 3 and 4 is then sealed at the location of the coupling by means of the contact between the outer surface 40 with the inner surface 1b, the outer surface 41 with the inner surface 2b, the contact of the end edges of the pipes 1 and 2 with the circumferential annular surface 7 and 8, the contact between the inclined surfaces 10 and 30, and the contact between the surfaces 18 and 19 of the socket ring 5 with the outer surfaces 1a and 2a.

When it is desirable to detach the connection, either the assembly of pipe 1 with socket ring 5 or the assembly of the pipe 2 with male part 6, can be rotated over 90° about either the inner pipe 3 or 4, so that the annular protrusions 35 arrive at the location of the insertion or withdrawal channels 16. An axial extracting force can then be exerted in order to let the protrusions move through the insertion/withdrawal channels 16, in which the lips 22 are then gradually urged radially to the inside, and via the situation shown in figure 5B, but in that case during the reversed process are then brought along the annular surface 19 beyond the end edge 14 of the socket ring 5, after which both pipe assemblies can simple be pulled from each other.

For the connection according to the invention a minimal treatment of the usual pipes is necessary. Only a number of annular holes need to be made, such as holes 37 and 39. They can simply be made beforehand in the factory. The pipes 1 and 2 can then at any one of either ends be provided with part 5 or part 6. The provisions necessary for the coupling and sealing are arranged in the coupling device 5, 6 itself as much as possible. The parts 5, 6 have a short axial length and can easily be provided with the wanted shapes by means of injection moulding.

Another advantage is that the coupling thus obtained can, as to material, be independent from the material of the pipes. The socket ring may for instance be made of polyethene or polypropene and the male part of a heat resistant PBT. The socket ring can be given any wanted colour, and may be an embellishment of the pipes 1 and 2.

In the figures 8A and 8B the single pipe connection is shown, in which comparable parts have the same reference numbers, increased by 100. It will be understood that the male part 106 is designed more simply than the male part 6, because no inner ring 27 and partitions 26 are needed.

## Claims

1. Gas pipe connection of two gas pipes comprising a coupling device circumferentially extending at the outside for engaging the outer ends of both pipes, in which both pipe ends are provided with one or several holes arranged divided in circumferential direction and the coupling device is provided with protrusions that can be secured or snapped into said hole or said holes.

2. Gas pipe connection according to claim 1, in which the protrusions are formed as a unity with the coupling device.

3. Gas pipe connection according to claim 1 or 2, in which the coupling device is provided with a number of protrusions that are arranged regularly divided in circumferential direction, preferably for each pipe end.

4. Gas pipe connection according to claim 1, 2 or 3, in which the coupling device comprises a female part and a male part, each being secured-preferably detachably- with snappable protrusions in respective pipe ends, preferably on their outer surface and their inner surface, respectively, in which the female part engages about the male part.

5. Gas pipe connection according to claim 4, in which the female part and the male part are provided with circle-cylindrical circumferential surfaces for fitting engagement of the respective pipe ends.

6. Gas pipe connection according to claim 3, 4 or 5, in which the female part and male part are provided with interacting sealing surfaces, preferably with conical circumferential surfaces that sealingly abut each other.

7. Gas pipe connection according to claim 6, in which the conical circumferential surfaces are formed on circumferential ribs extending to the inside from the female part and to the outside from the male part, respectively.

8. Gas pipe connection according to claim 6 or 7, in which the circumferential ribs are situated between both end edges of both pipes.

9. Gas pipe connection according to claim 7 or 8, in which the circumferential ribs have axially oriented circumferential surfaces for abutment to the end edges of the pipes in question.

10. Gas pipe connection according to any one of the claims 3-9, in which the female part, axially considered, engages over the protrusions of the male part, while fittingly engaging about the outer surface of the pipe that is connected to the male part.

11. Gas pipe connection according to claim 10, in which the female part is provided at its inside with radially accommodation spaces opening radially to the inside, into which the protrusions of the male part extend.

12. Gas pipe connection according to claim 11, in which the accommodation spaces in circumferential direction are contiguous to a passage for the protrusions, which passage extends in circumferential direction and subsequently in axial direction facing away from the connection.

13. Gas pipe connection according to any one of the claims 3-12, in which the male part is tubular.

14. Gas pipe connection according to any one of the preceding claims, in which, at the outside, the coupling device has a surface smooth convex in axial direction, particularly having the shape of an almost flat cylinder.

15. Gas pipe connection according to any one of the preceding claims, suitable for connecting pairs of concentric pipes, in which the coupling device is provided with radial partitions for keeping at least one of the inner pipes centred.

16. Gas pipe connection according to claim 15, when depending on claim 3, in which the male part is provided with the partitions.

17. Gas pipe connection according to claim 16, in which the male part is provided with means for retaining the inner pipe axially in a direction away from the connection.

18. Gas pipe connection according to claim 17, in which said inner pipe has an end that is shaped like a female part and accommodates the end of the other inner pipe.

19. Gas pipe connection according to claim 18, in which the female part of said inner pipe near its end is provided with a ring chamber opening to the inside for accommodating a sealing ring, which chamber has a semicircular cross-section.

20. Gas pipe connection according to any one of the preceding claims, accommodated in a line between a debouching structure and a boiler.

21. Gas pipe connection according to claim 20, in which the boiler is a closed gas appliance.

22. Gas pipe connection according to any one of the preceding claims, in which the coupling device is detachably connected to the pipe ends.
